# EUROPEAN PATENT SPECIFICATION

(11) **EP 0 478 152 B1**
(45) Date of publication and mention of the grant of the patent: **09.08.1995**
(21) Application number: 91307996.8
(22) Date of filing: 30.08.1991
(51) Int. Cl.: C01G 23/04, C04B 35/46, C25B 11/04, H01M 4/86

(54) **Production of reduced titanium oxide**
Herstellung von reduziertem Titan Oxid
Préparation d'oxyde de titane réduit

(30) Priority: 27.09.1990 GB 9021053
(43) Date of publication of application: 01.04.1992
(73) Proprietor: ATRAVERDA LIMITED, Eckington Sheffield S31 9FH (GB)
(72) Inventor: Kendall, Kevin, Runcorn, Cheshire (GB); Petts, Raymond William, Cuddington, nr Northwich, Cheshire (GB)
(74) Representative: Shaw, Laurence

(56) References cited:
- WO-A-88/05427
- US-A- 2 848 303

## Description

This invention relates to the production of a reduced titanium oxide, that is a titanium oxide having the formula TiOₓ in which x is less than 2.

Titanium oxides having the formula TiOₓ in which x is less than 2 are known materials and such materials are known to be electrically conducting. They may be produced in a variety of different forms, for example, in the form of a shaped structure in which particles of the titanium oxide are sintered together, and it has been proposed to use such structures as electrodes, eg as electrodes in electrolytic cells. Alternatively, the titanium oxide may be in the form of discrete particles and in such a form may be used in a fibre of an organic polymeric material in order to confer anti-static properties on the fibre.

By way of example of these known titanium oxides GB Patent 1,443,502 describes an electrode comprising a base of a titanium oxide TiOₓ, x being from 0.25 to 1.50, preferably from 0.42 to 0.60, the base being at least partially covered by a surface coating containing at least one activating substance which is effective in reducing the voltage drop which would occur in the absence of the activating substance. The activating substance may be, for example, a platinum group metal or a compound thereof, eg an oxide of a platinum group metal. European Patent 0,047,595 describes an electrode which is formed from a ceramic-like shaped solid coherent bulk titanium oxide having a general formula TiOₓ where x is a number in the range 1.67 to 1.9. The titanium oxide may be predominantly Ti₄O₇ and/or Ti₅O₉ that is TiOₓ in which x is 1.75 and/or 1.8, and the surface of the electrode may also have a coating of an activating substance.

Titanium oxides having the formula TiOₓ may be produced by a variety of different processes. For example, the titanium oxide may be produced by mixing titanium dioxide and titanium metal in the desired proportions and heating the mixture in an inert atmosphere, eg at a temperature in the range 900°C to 1500°C. Alternatively, titanium dioxide may be heated in an atmosphere of a reducing gas, eg in an atmosphere of hydrogen, and the heating may be continued until a titanium oxide of the desired formula is produced. In yet a further method of producing the titanium oxide titanium dioxide may be mixed with particulate carbon and the mixture may be heated until a titanium oxide having the desired formula is produced (see US-A-2848303).

Certain of the aforementioned processes suffer from disadvantages. Thus, although heating a mixture of particulate titanium dioxide and particulate carbon in the required proportion does produce a titanium oxide TiOₓ having the desired formula the titanium oxide which is produced is contaminated with carbon. Heating titanium dioxide in an atmosphere of a reducing gas, eg hydrogen, does result in production of uncontaminated titanium oxide but there is poor utilisation of the hydrogen in the reduction reaction caused, it is believed, by the presence of water formed in the reduction reaction. Indeed, the rate of reduction of the titanium dioxide in an atmosphere of a reducing gas may become very slow and may eventually virtually cease thus making it difficult to produce a titanium oxide TiOₓ in which x has a low value.

The present invention provides a process for the production of a titanium oxide TiOₓ in which the aforementioned disadvantages are substantially eliminated. In particular the process results in production of a titanium oxide which is substantially uncontaminated and in which there is a much increased utilisation of reducing gas.

According to the present invention there is provided a process for the production of titanium oxide having the formula TiOₓ in which x is less than 2, the process comprising heating a titanium oxide in the presence of carbon and in an atmosphere of a reducing gas characterised in that the titanium oxide starting material is placed on the surface of a support which is in the form of a sheet or board and which contains carbon to produce substantially uncontaminated reduced oxide.

It is believed that in the process of the invention the carbon reacts with the water which is produced at the elevated temperature at which the heating is effected thus leading to a better utilisation of the reducing gas. Furthermore, as the carbon reacts with the water the contamination of the titanium oxide TiOₓ which is produced is reduced.

The titanium oxide starting material will generally be titanium dioxide TiO₂ but this is not necessarily so. For example, the titanium oxide may itself have a formula TiOₓ in which x is less than 2 and in the process the titanium oxide may be further reduced, that is the value of x in the titanium oxide which is produced may be lower than that of x in the titanium oxide starting material. A mixture of titanium dioxide TiO₂ and a titanium oxide TiOₓ may be used.

The titanium oxide is placed on the surface of a support which is in sheet or board form and which contains carbon and the support and the titanium oxide are heated in an atmosphere of a reducing gas. A plurality of supports may be used with titanium oxide placed between each adjacent support. It is preferred that the support is porous, at least to the reducing gas, as this aids circulation of the reducing gas in the process and aids the reduction process.

The support may consist essentially of carbon. For example, the support may be a porous graphite sheet.

The reducing gas may be, for example, hydrogen or carbon monoxide, or it may consist of a mixture of reducing gases. The atmosphere in which the reduction is effected may consist essentially of reducing gas or it may comprise a reducing gas in admixture with an inert gas, that is a non-oxidising gas. A suitable such inert gas is nitrogen.

The titanium oxide which is heated in the process may be in particulate form, eg in a fine particulate form. For example, the particles of titanium oxide may have a size in the range up to 1000 »m, especially up to 100 »m. The particles of titanium oxide may, for example, have a size in the range 0.01 to 100 »m. Alternatively, the titanium oxide may be in the form of a structure, eg a sheet, in which particles of titanium oxide are at least partially sintered.

The temperature at which the heating is effected should be sufficiently high that the reduction of the titanium oxide is effected. In general this temperature will be at least 800°C, and usually it will be in excess of 1000°C. It will generally not be necessary to operate the process at a temperature in excess of 1500°C.

The titanium oxide TiOₓ which is produced may be in particulate form, although at the elevated temperature at which the heating is effected some sintering together of particles may take place, and if it is desired to produce a titanium oxide TiOₓ in particulate form it may be necessary to comminute the TiOₓ which is produced, eg by subjecting the TiOₓ to a suitable grinding process.

The titanium oxide TiOₓ which is produced may have a particle size in a range up to 1000 »m, especially up to 100 »m, and generally a particle size in the range 0.01 to 100 »m.

The time for which the process of the invention is effected will depend on the value of x which is desired in the titanium oxide of formula TiOₓ. Suitable times may be determined by simple trial and experiment.

The value of x in the titanium oxide TiOₓ which is produced in the process, and which may be determined by X-ray or chemical analysis, will generally be 1.95 or lower and it may be as low as 0.25. In general the value of x will be in the range 1.75 to 1.00.

The invention is now illustrated by the following examples.

### Example 1

This Example illustrates the preparation of titanium oxide TiOₓ by the process according to the present invention.

3 kg of titanium dioxide powder having a surface area of 3 m²/g was placed on a porous sheet of graphite to form a layer having a depth of 10 mm and the graphite sheet and titanium dioxide powder were placed in a furnace. Hydrogen was then passed into and through the furnace at a rate of 0.5664 m³/h (20 cu ft/hr) and the temperature of the furnace was increased at a rate of 5°C/minute until a temperature of 1200°C was reached. The contents of the furnace were then heated at 1200°C for 1 hour and the furnace was then allowed to cool whilst the flow of hydrogen was maintained. Analysis of the resultant titanium oxide powder indicated that the titanium dioxide had undergone a weight loss of 3.6%. The weight loss corresponds to a titanium oxide TiOₓ in which x = 1.82.

By way of comparison the above procedure was repeated except that the sheet of graphite was replaced by a sheet of cordierite. In this case analysis of the resultant titanium oxide powder indicated that the titanium dioxide had undergone a weight loss of 1.3%. The weight loss corresponds to a titanium oxide TiOₓ in which x = 1.93.

### Example 2

This Example illustrates a further preparation of titanium oxide Tioₓ by the proces according to the present invention.

The heating procedure of Example 1 was repeated except that the titanium dioxide powder supported on a porous graphite board was heated directly in a furnace at 1200°C for 15 minutes whilst passing hydrogen into and through the furnace at a rate of 0.5664 m³/h (20 cu ft/hr). The titanium dioxide suffered a weight loss of 2.8%, x in the resultant titanium oxide TiOₓ thus being 1.86.

### Example 3

This Example illustrates the process of the present invention wherein the starting titanium oxide was in sheet form.

The procedure of Example 1 was repeated except that titanium dioxide powder was pressed into the form of a sheet and placed between a pair of porous graphite sheets. The titanium dioxide suffered a weight loss of 4.0%, x in the resultant titanium oxide TiOₓ thus being 1.80.

By way of comparison the above procedure was repeated except that the porous graphite sheets were replaced by a pair of sheets of fibrous alumina. The titanium dioxide suffered a weight loss of 1.0%, x in the resultant titanium oxide TiOₓ thus being 1.95.

## Claims

1. A process for the preparation of titanium oxide having the formula TiOₓ in which x is less than 2, the process comprising heating titanium oxide in an atmosphere of reducing gas and in the presence of carbon characterised in that the titanium oxide starting metal is placed on the surface of a support which is in the form of a sheet or board and which contains carbon, to produce substantially uncontaminated reduced oxide.

2. A process as claimed in Claim 1, wherein the sheet or board support is porous to the reducing gas.

3. A process as claimed in Claim 2, wherein the support comprises a porous graphite sheet or board.

4. A process as claimed in any preceding Claim, wherein the titanium oxide starting material is titanium dioxide.

5. A porous as claimed in any preceding Claim, wherein the titanium oxide starting material is in the form of very fine particles.

6. A process as claimed in any preceding Claim, wherein the reducing gas comprises hydrogen, carbon monoxide or both.

7. A process as claimed in Claim 1, wherein the heating is carried out at less than 1500°C.

## Patentansprüche

1. Verfahren zur Herstellung voll Titanoxid mit der Formel TiOₓ mit einem x-Wert kleiner 2, wobei das Verfahren die folgenden Schritte umfaßt: Erhitzen von Titanoxid in Anwesenheit von Kohlenstoff und in einer Reduktionsgasatmosphäre, dadurch gekennzeichnet, daß das Titanoxid-Ausgangsmaterial zur Herstellung von im wesentlichen unverschmutzten reduzierten Oxiden auf die Oberfläche eines kohlenstoffhaltigen Trägers (z.B. eine Tafel oder eine Platte) gegeben wird.

2. Verfahren nach Anspruch 1, wobei die Tafel oder die Platte für das Reduktionsgas durchlässig ist.

3. Verfahren nach Anspruch 2, wobei der Träger aus einer porösen Graphittafel oder - platte besteht.

4. Verfahren nach einen der vorhergehenden Ansprüche, wobei das Titanoxid-Ausgangsmaterial Titandioxid ist.

5. Verfahren nach einem der vorhergehenden Ansprüche, wobei das Titanoxid-Ausgangsmaterial aus sehr feinen Partikeln besteht.

6. Verfahren nach einem der vorhergehenden Ansprüche, wobei das Reduktionsgas aus Wasserstoff, Kohlenmonoxid oder beidem besteht.

7. Verfahren nach Anspruch 1, wobei der Erhitzungsvorgang bei einer Temperatur unter 1500°C stattfindet.

## Revendications

1. Méthode de préparation de l'oxyde de titane dont la formule est TiOₓ et dans laquelle x est inférieur à 2, la méthode consistant à réchauffer l'oxyde de titane dans une atmosphère de gaz réducteur et en la présence de carbone, caractérisée en ce que le métal de départ de l'oxyde de titane est placé sur une surface de support qui a la forme d'une feuille ou d'une planche et qui contient du carbone, afin de produire de l'oxyde substantiellement réduit et non contaminé.

2. Méthode, selon la revendication 1, dans laquelle la feuille ou la planche de support est poreuse face au gaz réducteur.

3. Méthode, selon la revendication 2, dans laquelle le support comprend une feuille ou une planche de graphite poreuse.

4. Méthode, selon toute revendication précédente, dans laquelle le produit de départ de l'oxyde de titane est du blanc de titane.

5. Substance poreuse, selon la revendication précédente, dans laquelle le produit de départ de l'oxyde de titane est formé de particules très fines.

6. Méthode, selon toute revendication précédente, dans laquelle le gaz réducteur comprend de l'hydrogène, du monoxyde de carbone, ou les deux.

7. Méthode, selon la revendication 1, dans laquelle le réchauffement se fait à moins de 1500°C.
